# EUROPEAN PATENT SPECIFICATION

(11) **EP 2 167 841 B1**
(45) Date of publication and mention of the grant of the patent: **15.01.2014**
(21) Application number: 08766923.0
(22) Date of filing: 12.06.2008
(51) Int. Cl.: F16G 11/04, F16G 15/00, B63B 21/18

(54) **LOCKING DEVICE**
VERRIEGELUNGSVORRICHTUNG
DISPOSITIF DE VERROUILLAGE

(30) Priority: 12.06.2007 NO 20073010
(43) Date of publication of application: 31.03.2010
(73) Proprietor: Rolls-Royce Marine AS, 6025 Ålesund (NO)
(72) Inventor: WALDERHAUG, Sindre, N-6015 Ålesund (NO)
(74) Representative: Balle, Morten
(86) International application number: PCT/NO2008/000210
(87) International publication number: WO 2008/153411

(56) References cited:
- FR-A- 343 409
- GB-A- 399 305
- US-A- 3 758 922
- US-A- 4 093 042
- US-A- 4 423 697
- US-B1- 6 446 568
- MATS AUGDAL HEIDE OG INGRID BOUWER UTNE: "HMS i havbruk - utvikling og implementering av teknologi for forbedret personsikkerhet Delprosjekt store krefter" SINTEF FISKERI OG HAVBRUK AS, [Online] no. sfh80-a064050, September 2006 (2006-09), pages 1-71, XP002499802 Internet Retrieved from the Internet: URL:http://www.tekmar.no/tema/hms/SFH80A06 4050.pdf> [retrieved on 2008-10-15]

## Description

### The field of invention

The present invention relates to a method and device for temporarily securing or locking a chain or cable under tension during different operations. More specifically the present invention relates to an improved locking device, or a so-called "shark jaw", for a chain or a cable.

### Technical background

During several operations at the aft deck of a supply vessel or more specifically an anchor handling vessel, it is necessary to temporarily secure or lock a cable or chain under tension to perform operations such as, without limitations, shackling, connecting one chain with another, and substitution of parts of a cable or chain with another. Cable locks or chain locks of different kinds are routinely used for this purpose.

US 6.446.568 relates to improvements to a locking device for locking and securing cables or chains. The device comprises a "fork" structure comprising two substantially parallel teeth defining an opening there between in which opening one link of a chain may rest, so that the next link rests against the teeth of the fork. To give an effective locking without damaging the locking device and/or the chain, the distance between the teeth has to correspond to the dimension of the chain.

The main drawback with a locking device according to US 6.446.567 is that the opening defined between the teeth of the fork is constant, corresponding to the largest chain that may be used for that locking device. To adjust the device for a chain having smaller dimensions, inserts has to be installed. The inserts have to be manually mounted and secured by means of bolts, an operation which requires the presence of crew at the aft deck of the vessel.

US 4.423.697 (corresponding to NO 146271) relates to a hydraulically operated locking device for a cable or chain, comprising a jaw means having a pair of locking jaws that are moved towards/from one another by rotation of the jaw means about horizontal and parallel axis to close / open the locking device. The jaw means are rotated between the closed and open position by extracting/withdrawing a piston rod from/into a jack cylinder, allowing the locking device to be remotely operated. The locking means is, however, designed for one dimension of chain / wire.

NO 180776 relates to an alternative locking device for a wire or chain onboard a vessel, the locking device comprising two claw means that maybe rotated about vertical axis of rotation between an open and a locked position. The locking means are also integrated with two guide rods. To avoid damaging the wire or chain when the locking means is in its locked positions, notches are provided in the claws to give an aperture between the claw means adapted to allow one dimension of wire or chain to be locked without being damaged.

During an offshore lifting operation, such as an anchor handling operation, the information about the dimension of chains and/or wires connected to equipment to be handled, is not always accurate. To handle such situations, the locking means have to be adjustable. Accordingly, the devices according to US .423.697 and NO 180776, are not an option for vessels for operations such as anchor handling.

US 6.446.568 is illustrative for the predominant locking devices for anchor handling vessels. As mentioned above, to adjust the locking device according to US 6.446.568, an insert, optionally substituting an existing insert, has to be installed on the locking device. The substitution and mounting of the inserts is manual work requiring crew at the aft deck. Of security reasons, it is however, a goal to avoid crew at the aft deck during anchor handling operation. In heavy weather, it may even be impossible to send personnel to the aft deck to exchange the inserts, a situation that may result in an expensive stop in a planned or otherwise necessary operation.

One object of the present invention is therefore to provide locking means for a chain and/or a cable, that makes it possible to reduce or even avoid the necessity of having personnel at the aft deck of a vessel during lifting operations, such as anchor handling operations.

Another object is to provide a locking means that reduces or avoids stops in planned or otherwise necessary operations, by providing a locking device that may be remotely controlled.

### Summary of the invention

The above mentioned and other objects have been met by means of a locking device for temporary locking and securing of a chain, cable or wire, suitable to be arranged at the aft deck of a supply vessel or a anchor handling vessel, having the features of claim 1.

According to one embodiment, the clamps are arranged in a track in the main body of the locking device. By arranging the clamps in the main body of the locking device, the main body and the teeth of the main body may give the required support and strength to the device.

The track may be defined by a recess in the main body, a cover covering the recess, and a support member.

The locking device does according to one embodiment, include a substantially vertically displaceable clamp frame that is arranged in the groove and covered by the cover, the clamp frame comprising one or more slanting surface(s) that is/are arranged to interact on correspondingly slanting surface(s) on the clamps to displace the clamps substantially horizontally when the clamp frame is moved vertically.

According to one embodiment, guide pins fastened to the clamp frame, are arranged in corresponding slanting guide tracks arranged in the clamps.

According to another embodiment, guide pins fastened to the clamp, are arranged in corresponding slanting guide tracks arranged in the clamps frame.

According to yet another embodiment, the clamp frame comprises two clamp frame parts, each supporting one clamp. Tests done by the applicant has shown that operation of the device is improved and the reliability improved if the clamp frame is divided in two, preferably independent, clamp frame parts each supporting one clamp.

The clamp frame parts may be operated by separate actuators. When the clamp frame parts are operated by separate actuators, the control and fail safe properties of the device is further improved.

The top part of the teeth are preferably slanting towards the gap to guide a chain, wire or cable towards the gap.

### Short description of the figures

The present invention will now be further explained by use of the enclosed figures, where
Fig. 1 is a bird's eye view of a shark jaw and to pins,
Fig. 2 is a view of a shark jaw seen from the aft deck of a vessel towards aft of the vessel,
Fig. 3 is view of a shark jaw seen from abaft,
Fig. 4 is a cross section along A-A of figure 2,
Fig. 5 is a view corresponding to fig. 2, where a cover is removed,

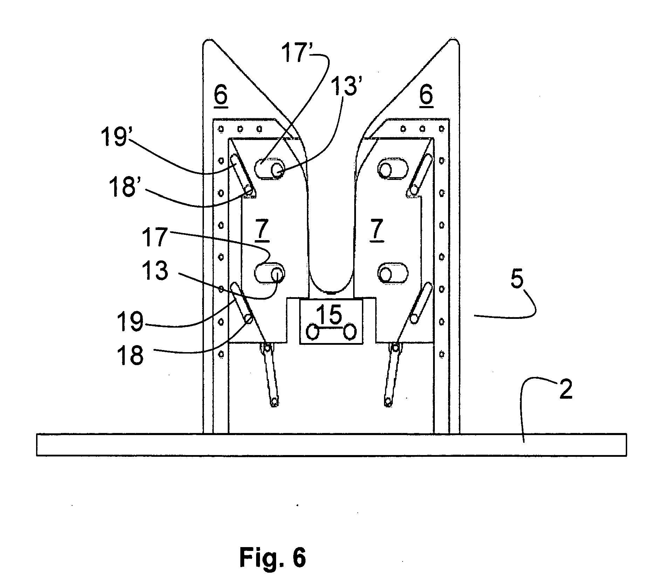

Fig. 6 is a view corresponding to fig. 2, where a cover and clamp frame are removed,
Fig. 7 are sections corresponding to figure 2 of a first alternative embodiment,
Fig. 8 are sections corresponding to figure 2 of a second alternative embodiment,
Fig. 9 is a bird's eye view of an alternative embodiment of the shark jaw and tow pins, and
Fig. 10 is a perspective view of an alternative embodiment having tow pins integrated with the shark jaw.

### Detailed description of the invention

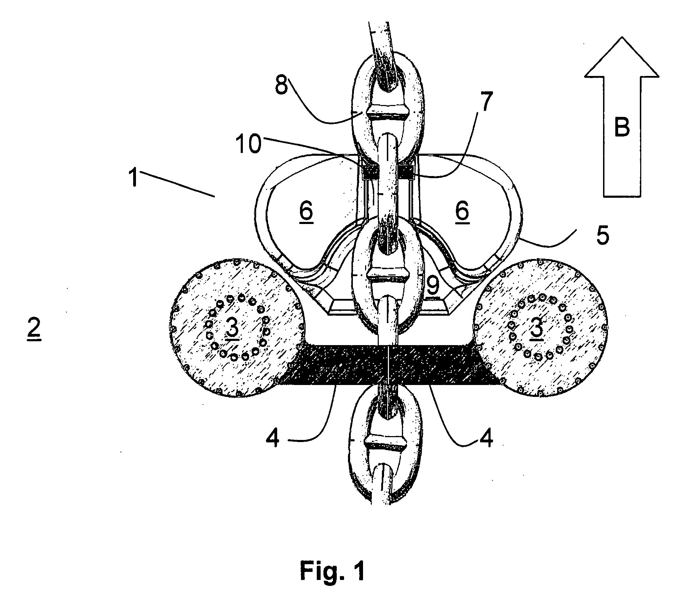

Figure 1 is a bird eye's view of a first embodiment of the present locking device, or "shark jaw" 1, arranged at an aft deck 2 of a vessel together with a pair of tow line guide pins 3 provided with cross members 4.

The orientation of the shark jaw and tow pins is indicated by an arrow B pointing in the length direction towards the bow of the vessel. A chain 8 is arranged in the shark jaw and between the tow pins 3 to illustrate the position of the chain 8 in active use of the shark jaw and tow pins. The tow line guide pins 3 and cross members 4 are of a well known type that may be lowered into the deck of the vessel, and where the tow pins 3 or a top part thereof, may be rotated to move the cross members from a first position as illustrated in the figure, to an open position where the cross members are running substantially parallel to the chain 8 to allow the chain to be lifted out over the tow pins. Even thought the tow pins and shark jaw are illustrated in their active position in figure 1, the tow pins and shark jaw may be used independently of each other.

The shark jaw comprises a fork shaped main body 5 having two teeth 6 defining an opening 10 between them. The distance between the two teeth 6, or the opening 10, is wider than the diameter of the maximum chain diameter (diameter of each chain link) to be used with the shark jaw. Adjustable clamps 7 are arranged on the teeth 6 as described in detail below, to allow for adjusting the distance between the claims according to the dimension of the chain 8.

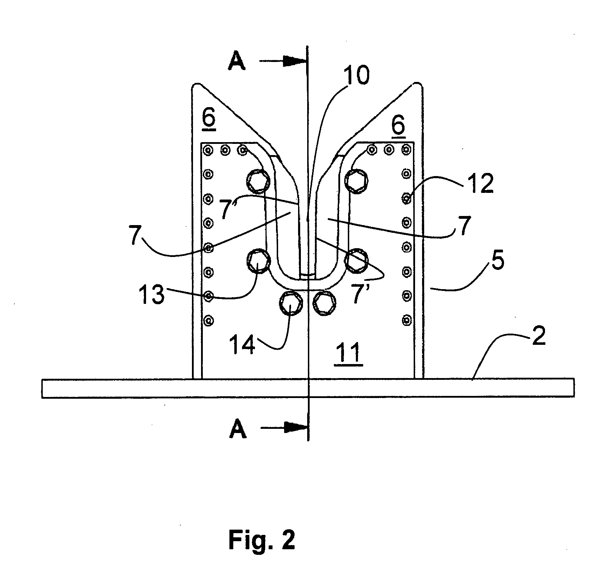

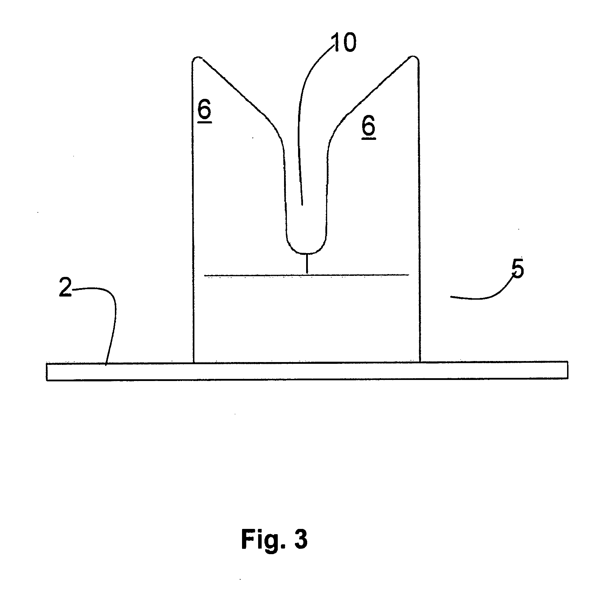

Figure 2 illustrates a shark jaw 1 in its active, or upper, position seen from the deck towards the stem of the vessel. A cover 11 covers a recess at the front part of the main body 5 and parts of the teeth 6 of the shark jaw . The cover 11 is fastened to the main body by means of bolts 12, 13, 14. Figure 3 illustrates the shark jaw seen from abaft.

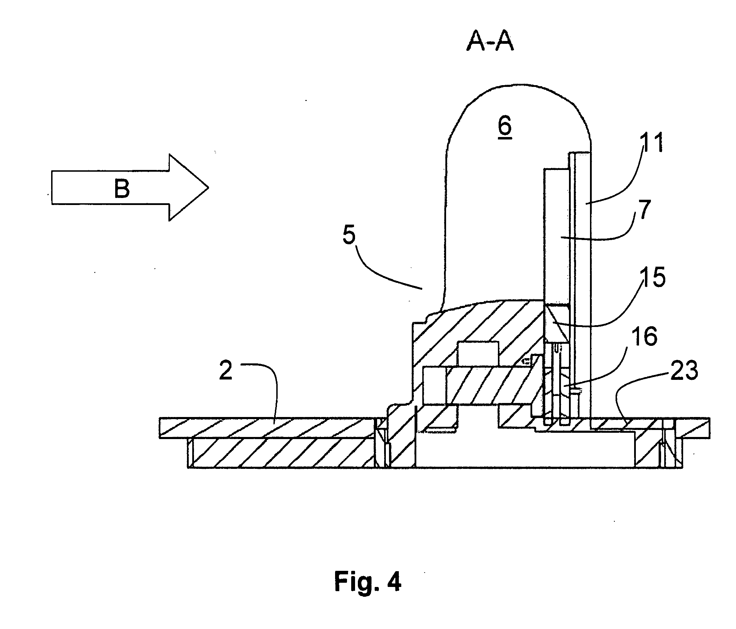

Figure 4 is a illustrates the section A-A of figure 2, and shows the adjustable clams 7 arranged in a recess in the main body 5 and teeth 6 supported by the cover 11 and resting on a support member 15 at the lower end of the adjustable clamp. The recess, cover and base member define a track for the movement of the clamps 7, to make a track in which the clamps are displaceable arranged. The adjustable inserts 7 are allowed to be displaced horizontally substantially perpendicular to the length axis of the vessel to adjust the gap between the inserts 7.

A clamp frame 16 is also arranged in the recess in the main body, covered by the cover 11. The clamp frame is adapted to be moved substantially vertically by means of not shown actuators, in the recess in the main body 5 and teeth 6.

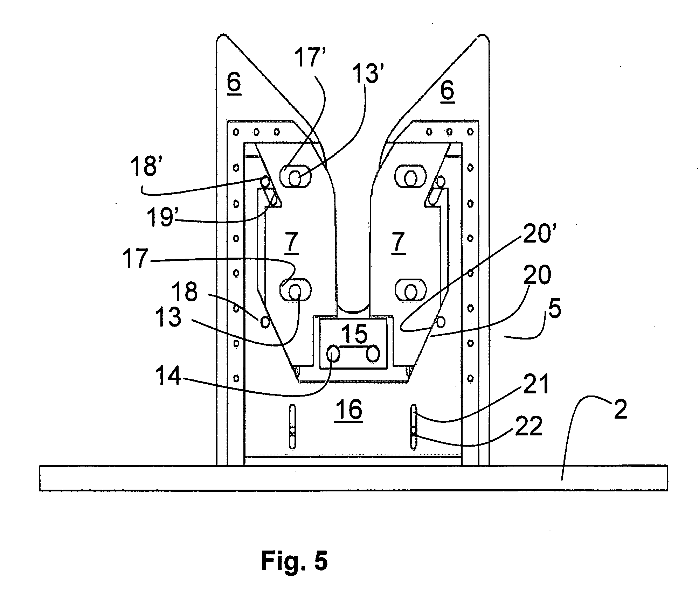

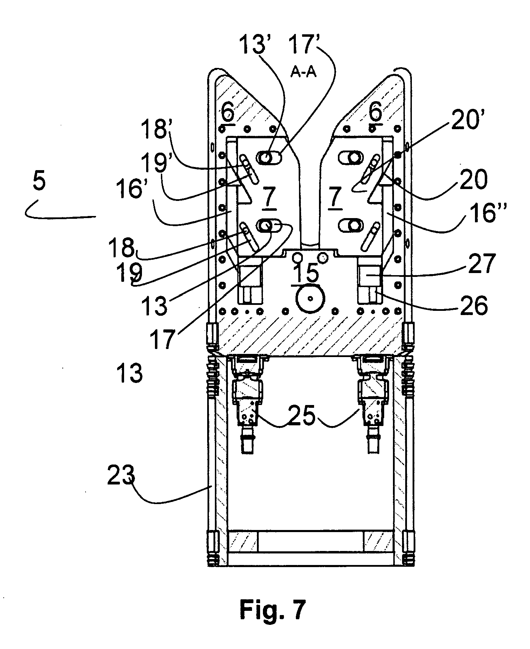

The clamp frame 16 is operateably connected to the adjustable clamps in that slanting surfaces 20 of the clamp frame rests against correspondingly slanting surfaces 20' of the adjustable clamps. In the devices illustrated in figures 5 and 7, and upwards movement of the clamp frame 16 will cause the adjustable clamps 7 to be moved against each other to reduce the distance between the clamps 7. When the clamp frame is lowered, the adjustable clamps 7 are moved away from each other by means of guide pins 18, 18' connected to the clamp frame 16 and are inserted into guide tracks 19, 19' in the adjustable clamps, resulting in the adjustable clamps being removed from each other, due to the guide tracks being inclined relative to a horizontal line. Preferably, the guide track are inclined at the same angle as the slanting surface 20.

The embodiment according to figure 5 has two slanting surfaces 20, 20' for each of the two adjustable clamps, whereas only one slanting surface for each of the adjustable clamps are present in the embodiment of figure 7.

Guide rods 22 that are arranged in vertical guide tracks 21, may also be provided to guide the clamp frame. Additionally, cutouts 17, 17' is preferably provided for the bolts 13, 13'.

In an offshore operation were the shark jaw is to be used for locking a wire, cable or chain, the adjustable clamps are remotely adjusted according to the diameter of the wire, cable or chain to allow them to be inserted between the adjustable clamps without being squeezed between the clamps. When used for a wire or a cable, a wire clam or wire lock arranged on the wire or cable will be stopped by the adjustable clams and thus be locked to the shark jaw. When using the shark jaw or a chain, the next chain link will be caused to rest against the adjustable clams if the shark jaw is correctly adjusted, to lock the chain to the shark jaw.

The teeth 6 are preferably inclined towards the opening 10 to provide a self centring effect to lead a chain, cable or wire that is placed between the teeth towards the opening 10 and into engagement with the inserts.

At the high tension side of the shark jaw, normally towards the aft end of the vessel, a support part 9 of the main body is provided aft of the opening 10 as a support for the first chain link aft of the opening 10.

The present shark jaw is remotely adjustable so that the shark jaw may be used for several dimensions of chain, cable or wire. Preferably, the distance between the inserts corresponds to the diameter of the chain, so that a vertically arranged chain link fits in between the inserts. A chain that is too large will not fit into the locking opening, resulting in no or inadequate locking. If the distance between the inserts is too wide, the result may again be poor or inadequate locking and even damages on the chain.

Both the shark jaw 1 and the tow line guide pins 3 are preferably vertically displaceable so that they may be moved from stowed position where the top of the shark jaw and/or the tow pins are at the level with or below the deck 2, and to an active position where the active parts of the shark jaw and tow pins are above deck. Not shown cover(s) that may be handled manually or automatically, may be present to cover the shark jaw and / or the tow pins when they are in the lower or sowed position. The shark jaw and tow pins are arranged in recesses in the deck supported by not illustrated structures below deck and connected to actuators and controls for the operation of the shark jaw and tow pins as described below. It is preferred that the shark jaw and the guide pins may be lowered into and ejected from the deck 2 independently of each other. The guide pins in this embodiment are conventional guide pins, e.g. as known from US 4.503.649, which is included in the present description as reference. Locking members 4 arranged at top of the guide pins may be rotated about the vertical axis of the guide pins from an open position where the locking members are parallel to each other and are substantially parallel with the length axis of the vessel, and a locked position where the locking members faces each other and prevents a chain, a line of wire positioned between the guide pins to be drawn up above the guide pins.

The main body 5 of the shark jaw is according to one embodiment, connected to a substantially tubular base member 23 that is vertically displaceable between a position where the shark jaw is below deck, and a position where the top of the base member is substantially flush with the deck. The base member is arranged in a supporting structure to give the shark jaw the necessary support and strength.

Figure 7 is a view A-A also including the base member 23, of an alternative embodiment, where the clamp frame 16 is split into two parts 16', 16", one part 16', 16" supporting one of the clamps 7. Each part is here controlled by an individual actuator 25. The actuators, both in this embodiment and the other embodiments of the invention, may be hydraulic actuators or electrical actuators as illustrated in figure 7. The electrical actuators 25 illustrated in figure 7 is connected to a treaded bar 26 having a treaded connection to either the actuator 25 or a treaded member of the clamp frame part 16', 16" so that a rotation in the actuators is converted into a vertical movement of the clamp frame part 16', 16".

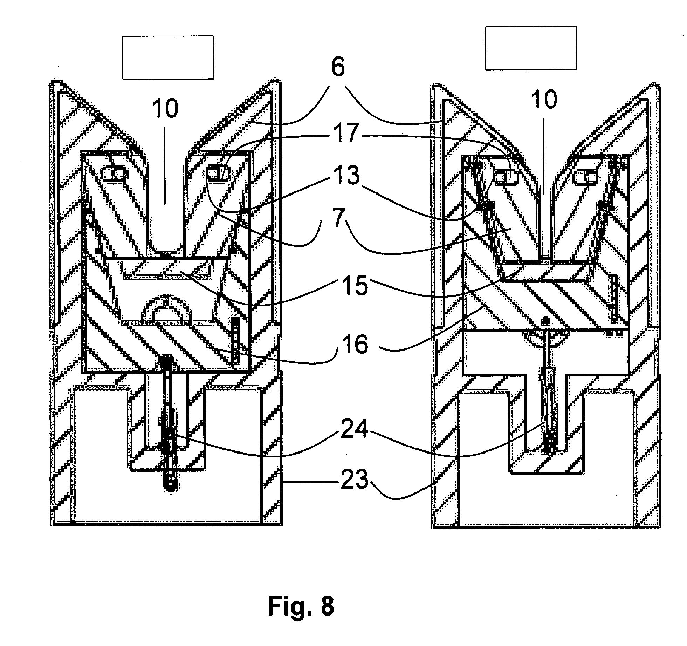

Figure 8 illustrates an alternative embodiment in views corresponding to the view of figure 2, where only one slanting surface is present per clamp. The figure to the left illustrates the shark jaw having wide gap 10, whereas the view to the right illustrates a more narrow gap 10. The figure clearly illustrates that the upper position of the clamp frame corresponds to a narrow gap 10 and the lower position to a wide gap.

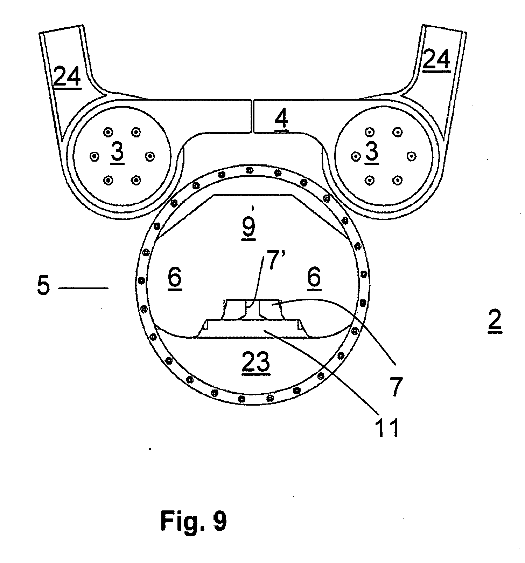

Figure 9 is a bird's eye view of a shark jaw 5 according to the present invention combined with tow pins. The locking members 4 of the tow pins 3, are closed. The tow pins may be lowered into the deck into recesses 24 when not in use.

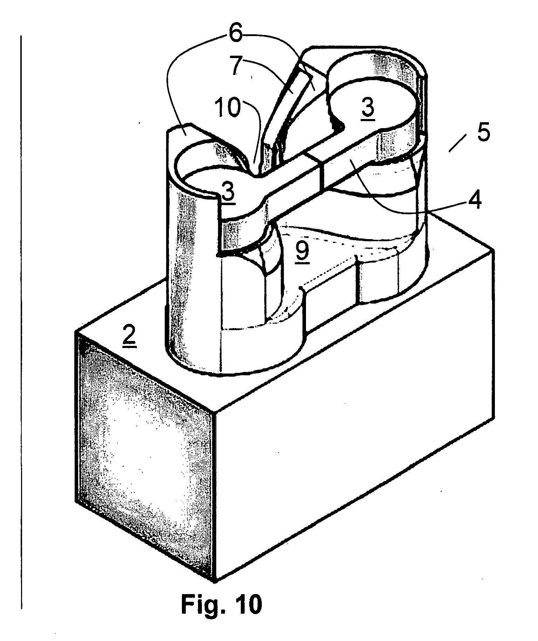

Figure 10 is a perspective view of an embodiment of the present shark jaw where the tow pins 3 and shark jaw is combined into an integrated unit.

## Claims

1. A locking device for temporary locking and securing of a chain, cable or wire clamp or lock, suitable to be arranged at the aft deck of a supply vessel or a anchor handling vessel, the device comprising a fork shaped main body (5) comprising two teeth (6) where clamps (7) extending from the teeth (6) towards each other, the clamps, in use, having substantially vertically arranged edges (7') facing each other and defining substantially vertical a gap (10) between the edges (7'), where the distance between the clamps being adapted to the diameter of a chain link or cable or a wire so that it may pass into the gap without being squeezed between the clamps, but where a next chain link of a chain or a clamp or lock on a cable or wire, is stopped against the clamps (7) to lock or secure the chain, cable or wire, **characterised in that** the locking clamps (7) are in use substantially linearly and horizontally displaceable, and substantially perpendicular to the length axis of the vessel for adjustment of the gap (10) between the clamps (7) according to the diameter of the cable or wire clamp or lock or chain link.

2. The locking device according to claim 1, wherein the clamps (7) are arranged in a track in the main body (5) of the locking device.

3. The locking device according to claim 2, wherein the track is defined by a recess in the main body (5), a cover (11) covering the recess, and a support member (15).

4. The locking device according any of the preceding claims, wherein a substantially vertically displaceable clamp frame (16) is arranged in the groove and covered by the cover (11), the clamp frame (16) comprising one or more slanting surface(s) (20) that is/are arranged to interact on correspondingly slanting surface(s) (20') on the clamps (7) to displace the clamps (7) substantially horizontally when the clamp frame (16) is moved vertically.

5. The locking device according to claim 4, wherein guide pins (18, 18') fastened to the clamp frame (16) are arranged in corresponding slanting guide tracks (19, 19') arranged in the clamps (7).

6. The locking device according to claim 4, wherein guide pins (18, 18') fastened to the clamp (7) are arranged in corresponding slanting guide tracks (19, 19') arranged in the clamps frame (16).

7. The locking device according to any of the preceding claims, wherein the clamp frame (16) comprises two clamp frame parts (16', 16"), each supporting one clamp (7).

8. The locking device according to claim 7, wherein the clamp frame parts (16', 16") are operated by separate actuators (25).

9. The locking device according to any of the preceding claims, wherein the top part of the teeth (6) are slanting towards the gap (10) to guide a chain, wire or cable towards the gap (10).

## Patentansprüche

1. Verriegelungsvorrichtung zum zeitweisen Verriegeln und Sichern einer Ketten-, Kabel- oder Drahtklemme oder -verriegelung, welche geeignet ist, auf dem Achterdeck eines Versorgungsschiffs oder eines Ankerhandhabungsschiffs angeordnet zu werden, wobei die Vorrichtung einen gabelförmigen Hauptkörper (5) umfasst, welcher zwei Zähne (6) umfasst, wobei sich Klemmen (7) von den Zähnen (6) zueinander erstrecken, wobei die Klemmen bei Gebrauch im Wesentlichen senkrecht zur Längsachse des Schiffs verlaufende Kanten (7') aufweisen, welche einander zugewandt sind und einen im Wesentlichen vertikalen Spalt (10) zwischen den Kanten (7') begrenzen, wobei der Abstand zwischen den Klemmen an den Durchmesser eines Kettenglieds oder Kabels oder eines Drahts angepasst ist, so dass diese im Spalt laufen können, ohne zwischen den Klemmen gepresst zu werden, wobei aber ein nächstes Kettenglied einer Kette oder eine Klemme oder Verriegelung auf einem Kabel oder Draht gegen die Klemmen (7) blockiert wird, um die Kette, das Kabel oder den Draht zu verriegeln oder zu sichern,
**dadurch gekennzeichnet, dass** die Verriegelungsklemmen (7) beim Gebrauch im Wesentlichen linear und horizontal verstellbar sind und im Wesentlichen senkrecht zur Längsachse des Schiffs verlaufen, um den Spalt (10) zwischen den Klemmen (7) entsprechend des Durchmessers der Kabel- oder Drahtklemme oder -verriegelung oder des Kettenglieds einzustellen.

2. Verriegelungsvorrichtung nach Anspruch 1, wobei die Klemmen (7) in einer Spur im Hauptkörper (5) der Verriegelungsvorrichtung angeordnet sind.

3. Verriegelungsvorrichtung nach Anspruch 2, wobei die Spur durch eine Ausnehmung im Hauptkörper (5), eine die Ausnehmung abdeckende Abdeckung (11) und ein Stützelement (15) begrenzt ist.

4. Verriegelungsvorrichtung nach einem der vorhergehenden Ansprüchen, wobei ein im Wesentlichen vertikal verstellbarer Klemmenrahmen (16) im Einschnitt angeordnet und durch die Abdeckung (11) abgedeckt ist, wobei der Klemmenrahmen (16) ein oder mehrere geneigte Oberfläche(n) (20) umfasst, welche angeordnet ist/sind, um mit (einer) entsprechend geneigten Oberfläche(n) (20') auf den Klemmen (7') zusammenzuwirken, um die Klemmen (7) im Wesentlichen horizontal zu verstellen, wenn der Klemmenrahmen (16) vertikal bewegt wird.

5. Verriegelungsvorrichtung nach Anspruch 4, wobei am Klemmenrahmen (16) befestigte Führungsstifte (18, 18') in entsprechenden geneigten, in den Klemmen (7) angeordneten Führungsspuren (19, 19') angeordnet sind.

6. Verriegelungsvorrichtung nach Anspruch 4, wobei an der Klemme (7) befestigte Führungsstifte (18, 18') in entsprechenden geneigten, im Klemmenrahmen (16) angeordneten Führungsspuren (19, 19') angeordnet sind.

7. Verriegelungsvorrichtung nach einem der vorhergehenden Ansprüchen, wobei der Klemmenrahmen (16) zwei Klemmenrahmenteile (16', 16'') umfasst, welche jeweils eine Klemme (7) stützen.

8. Verriegelungsvorrichtung nach Anspruch 7, wobei die Klemmenrahmenteile (16', 16'') durch separate Aktuatoren (25) betätigt werden.

9. Verriegelungsvorrichtung nach einem der vorhergehenden Ansprüchen, wobei der obere Teil des Zahns (6) in Richtung des Spalts (10) geneigt ist, um eine Kette, einen Draht oder ein Kabel in Richtung des Spalts (10) zu führen.

## Revendications

1. Dispositif de verrouillage pour le verrouillage et la fixation temporaire d'une pince ou d'un verrou de chaîne, câble ou fil, adapté pour être agencé au niveau du pont arrière d'un navire ravitailleur ou d'un navire manipulant une ancre, le dispositif comprenant un corps principal en forme de fourche (5) comportant deux dents (6) où des pinces (7) s'étendent à partir des dents (6) en direction l'une de l'autre, les pinces, en utilisation, ayant des bords agencés sensiblement verticalement (7') se faisant face et définissant un espace sensiblement vertical (10) entre les bords (7'), où la distance entre les pinces est adaptée au diamètre d'un maillon de chaîne ou d'un câble ou d'un fil de telle sorte qu'il peut passer dans l'espace, sans être comprimé entre les pinces, mais où un maillon de chaîne suivant d'une chaîne ou une pince ou un verrou sur un câble ou un fil, est arrêtée contre les pinces (7) pour verrouiller ou fixer la chaîne, le câble ou le fil, **caractérisé en ce que** les pinces de verrouillage, sont, en utilisation, déplaçables sensiblement linéairement et horizontalement, et sensiblement perpendiculaires à l'axe longitudinal du navire pour le réglage de l'espace (10) entre les pinces (7) en fonction du diamètre, du fil ou du maillon de chaîne.

2. Dispositif de verrouillage selon la revendication 1, dans lequel les pinces (7) sont agencées dans une piste dans le corps principal (5) du dispositif de verrouillage.

3. Dispositif de verrouillage selon la revendication 2, dans lequel la piste est définie par un évidement dans le corps principal (5), un couvercle (11) recouvrant l'évidement, et un élément de support (15).

4. Dispositif de verrouillage selon l'une quelconque des revendications précédentes, dans lequel un châssis de pince déplaçable sensiblement verticalement (16) est disposé dans la gorge et recouvert par le couvercle (11), le châssis de pince (16) comprenant une ou plusieurs surface(s) inclinée(s) (20) qui est/sont agencée(s) pour interagir avec une ou des surface(s) (20') inclinée(s) de manière correspondante sur les pinces (7) pour déplacer les pinces (7) sensiblement horizontalement lorsque le châssis de pince (16) est déplacé verticalement.

5. Dispositif de verrouillage selon la revendication 4, dans lequel des axes de guidage (18, 18') fixés sur le châssis de serrage (16) sont agencés dans des pistes de guidage inclinées correspondantes (19, 19') agencées dans les pinces (7).

6. Dispositif de verrouillage selon la revendication 4, dans lequel des axes de guidage (18, 18 ') fixées sur la pince (7) sont agencées dans des pistes de guidage inclinées correspondantes (19, 19') agencées dans le châssis des pinces (16).

7. Dispositif de verrouillage selon l'une quelconque des revendications précédentes, dans lequel le châssis de pince (16) comprend deux parties de châssis de pince (16', 16"), chacun supportant une pince (7).

8. Dispositif de verrouillage selon la revendication 7, dans lequel les parties de châssis de pince (16', 16") sont actionnées par des actionneurs séparés (25).

9. Dispositif de verrouillage selon l'une quelconque des revendications précédentes, dans lequel les parties supérieures des dents (6) sont inclinées vers l'espace (10) pour guider une chaîne, un fil ou un câble vers l'espace (10).
